# DEMANDE DE BREVET EUROPEEN

(11) **EP 2 006 705 A1**
(43) Date de publication de la demande: **24.12.2008**
(21) Numéro de dépôt: 07301143.9
(22) Date de dépôt: 22.06.2007
(51) Int. Cl.: G01S 1/00, H04Q 7/38

(54) **Procédé et système de pré-localisation précis d'un récepteur de signaux de navigation par satellites fonctionnant en mode assisté par un réseau de télécommunication mobile**

(71) Demandeur: Alcatel Lucent, 75008 Paris (FR)
(72) Inventeur: Monnerat, Michel, 31240 L'Union (FR)
(74) Mandataire: Hedarchet, Stéphane

(57) **Abrégé**

La présente invention concerne un procédé de détermination de localisation d'un dispositif de communication mobile évoluant dans un réseau cellulaire. Le procédé mis en oeuvre repose sur l'utilisation de la connaissance de la topologie du réseau cellulaire afin de déterminer la localisation et/ou l'incertitude de localisation du dispositif de communication.

## Description

La présente invention concerne un procédé et un système de pré-localisation pour l'assistance aux systèmes de radio-navigation par satellites. Elle s'applique notamment pour les systèmes de positionnement par satellite combinant les techniques de communication par satellite et les techniques de localisation par satellite tels que le système A-GPS par exemple.

Dans un système de positionnement par satellites utilisant des récepteurs du type GNSS (Global Navigation Satellite System) tels qu'un récepteur GPS (Global Positioning System) ou Galileo, les signaux de données permettant au récepteur de calculer son positionnement proviennent de différents satellites (quatre au minimum pour déterminer 4 inconnues (x,y,z,t)). Il est bien connu par l'Homme du Métier que le positionnement par un tel système suppose au préalable deux types de traitement au niveau du récepteur. Le premier consiste à acquérir le signal provenant d'au moins 4 satellites, le second consiste à évaluer la distance séparant le récepteur des satellites dont le signal a été reçu. L'interface entre un système de navigation par satellites (RNSS, Radio Navigation Satellite System) et le récepteur utilisateur repose sur un signal radio électrique, lui même reposant sur une technique de spectre étalé, bien connue de l'homme de l'art. Les techniques de spectre étalé, dans leurs formes les plus courantes telles que sur le GPS code C/A, Galileo F/Nav, reposent sur l'utilisation d'un code pseudo aléatoire périodique. Dans le cadre du GPS, ce code possède une période de 1ms. Ce code se rajoute à un message de navigation numérique, ce message comportant un certain nombre d'informations nécessaires au calcul de la position du récepteur, typiquement :
- Référence horaire, bien connue sur GPS sous le nom de TOW (Time of Week) correspondant à l'heure d'émission du message,
- La position du satellite au moment de l'envoi du message, bien connue sur GPS sous le nom d'éphémérides,
- Certaines corrections à apporter sur l'horloge bord du satellite, bien connues sur GPS sous le nom de "clock corrections" ou corrections d'horloge, visant à corriger la Référence horaire par rapport à l'horloge globale du système,
- Certains paramètres de correction de propagation, tels que des paramètres de corrections de vitesse de propagation des ondes électromagnétiques dans les couches de l'atmosphère (en particulier la ionosphère),
- La position approximative des autres satellites de la constellation via des données dites d'almanachs.

Le débit des données est bien entendu plus lent que le débit du code d'étalement périodique. Typiquement sur le signal GPS SPS, le débit de données s'élève à 50 bits par seconde, alors que celui du code est de 1,023 million de bribes par seconde. Un code complet est constitué de 1023 bribes (soit 1ms). L'ensemble des données ajoutées modulo 2 au code d'étalement est transmis sur une porteuse. Typiquement sur GPS la porteuse se trouve à 1.57542 GHz.

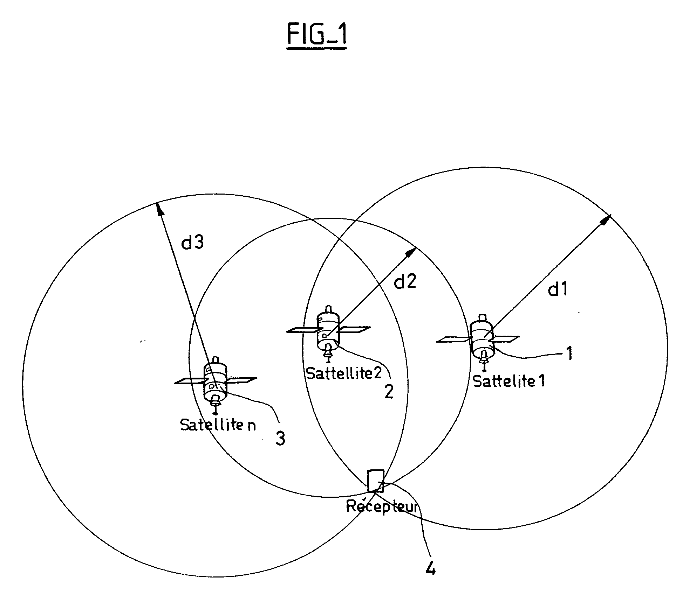

La détermination de la position du récepteur est représentée en figure 1. Le principe consiste pour le récepteur [4] à déterminer les distances [d1], [d2], [d3] le séparant d'au moins trois satellites de la constellation représentée par [1], [2] et [3]. Une fois déterminées les distances [d1], [d2] et [d3], le récepteur se positionne à l'intersection des sphères dont le centre est matérialisé par la position du satellite lui même et dont le rayon est fourni par la distance [di]. La mesure de distance se fait par chronométrage de temps d'arrivée d'un signal radio électrique provenant du satellite. Il s'ensuit que les informations essentielles provenant du satellite via le message de navigation et que doit traiter le récepteur sont constituées par le couple (date d'émission, position du satellite au moment de l'émission). La satellite transmet dans son message de navigation ses éphémérides (paramètres Kepleriens) permettant au récepteur de calculer la position du satellite dans un référentiel lié à la terre. Les éphémérides sont constituées dans le cas de GPS de 16 paramètres.

| | |
|---|---|
| M0 | Anomalie Moyenne |
| Dn | Deplacement Moyen |
| E | Eccentricité |
| (A)1/2 | Racine du demi grand axe |
| OMEGA0 | Longitude du noeud ascendant |
| I0 | Inclinaison |
| W | Argument de perigée |
| OMEGADOT | Dérivée temporelle de l'ascension droite |
| IDOT | Derivée temporelle de l'inclinaison |
| Cuc | Amplitude cosinus de l'harmonique du terme de correction de l'argument de latitude |
| Cus | Amplitude sinus de l'harmonique du terme de correction de l'argument de latitude |
| Crc | Amplitude cosinus de l'harmonique du terme de correction du rayon de l'orbite |
| Crs | Amplitude sinus de l'harmonique du terme de correction du rayon de l'orbite |
| Cic | Amplitude cosinus de l'harmonique du terme de correction de l'angle d'inclinaison |
| Cis | Amplitude sinus de l'harmonique du terme de correction de l'angle d'inclinaison |

Ces paramètres sont répétés toutes les 30 secondes dans le message de navigation.

La position du satellite étant obtenues, il reste au récepteur à détecter l'heure d'émission du message afin de déduire le temps de propagation de l'onde et par suite la distance le séparant du satellite, et ainsi le rayon d'une des 4 sphères nécessaires. Comme indiqué précédemment, l'heure fait aussi partie du contenu du message de navigation diffusé par le satellite. Cette heure est répétée toutes les 6 secondes. Cependant il convient d'appliquer à l'heure lue dans le message de navigation une correction d'horloge satellitaire afin de ramener l'heure transmise dans une référence système commune à tous les satellites. Cette correction est elle transmise toutes les 30 secondes.

En conclusion, il apparaît clairement qu'un récepteur ne peut être en mesure de déterminer sa position qu'au bout d'un temps minimum de 30 secondes après avoir acquis le signal. On entend par "acquisition du signal" la toute première opération à effectuer par le récepteur, qui lui permet de se synchroniser fréquentiellement et temporellement sur les trains de bits transmis, phase essentielle pour la démodulation du message de navigation. L'acquisition consiste pour le récepteur à effectuer une recherche temps fréquence de l'énergie du signal provenant du satellite. L'accrochage fréquentiel sur le signal du satellite consiste pour le récepteur à s'accorder sur la fréquence à laquelle le signal du satellite est reçu. Le récepteur pour cela possède 3 incertitudes le conduisant à effectuer cette recherche :
Incertitude Doppler lié à la mobilité du satellite,
Incertitude Doppler lié à la mobilité de l'utilisateur,
Incertitude liée à la précision de l'horloge récepteur.

L'accrochage temporel consiste pour le récepteur à identifier une transition de code du signal reçu. Le code d'étalement dans le cas du GPS étant périodique de période 1ms, la recherche temporelle s'effectue sur un horizon de 1ms. Une fois la transition de code identifiée, il est bien connu par l'homme de l'art comment identifier une transition bit puis la synchronisation trame diffusée dans le message de navigation.

Cette recherche temps-fréquence est très coûteuse en termes de complexité du récepteur et limite d'autant plus la performance du récepteur.

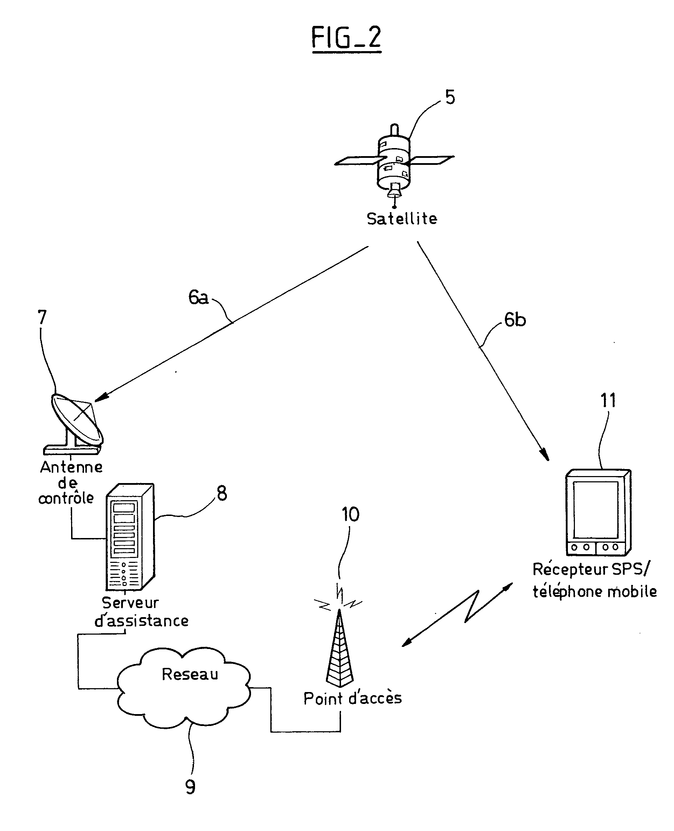

La méthode connue de l'homme de l'art pour alléger la complexité de traitements au niveau du récepteur et par suite améliorer les performances des récepteurs est connue sous le nom de GPS Assisté ou GNSS assisté. Cette méthode consiste à coupler un système de communication cellulaire et un récepteur de signaux de navigation par satellites. Ce procédé est décrit en figure 2. Il suppose que le récepteur de signaux de navigation par satellites soit couplé à un récepteur de communication cellulaire [11]. Un équipement du réseau communément appelé serveur de données d'assistance [8] écoute en permanence les satellites de la constellation satellitaire via le signal radio électrique [6a] et l'antenne de référence [7]. Les informations du message de navigation de chaque satellite sont alors stockées par le serveur [9]. Lorsque le récepteur [11] recherche sa position, il requiert un certain nombre de données d'assistance via une communication par la station de base [10] vers le serveur de données d'assistance. Les données d'assistance sont alors renvoyées par le serveur [8], vers le récepteur [11] via la station de base [10]. Ces données d'assistance facilite le traitement du signal [6b] reçu par le récepteur et confère au récepteur une performance accrue, entre autres, en termes de temps de calcul. En effet les données d'assistance peuvent être du type suivant :
- Contenu du message de navigation diffusé dans [6b] et [6a]. Le contenu est renvoyé avec un débit bien plus grand que le débit du message de navigation. Les temps mis pour acheminer les données essentielles à la détermination de la position passe ainsi de 30 secondes à 1 à 2 secondes,
- Une pré-localisation du récepteur [11]. En effet, le récepteur [11] étant connecté à la station de base [10], le serveur [8] est en mesure de savoir que le récepteur se trouve dans le voisinage de la station de base [10]. Typiquement, dans un réseau de type GSM, la dimension des cellules est inférieure à 35km,
- Une référence horaire. Le serveur [8] recevant les données du satellite [5], est en mesure de connaître l'heure du système satellitaire et par suite de la diffuser au récepteur [11]. La plupart des réseaux de communication cellulaire étant asynchrones, la référence horaire transmise ne peut atteindre une précision que de l'ordre de 2 à 3 secondes.
- Différents types de corrections : corrections de vitesse de propagation, correction d'horloge bord du satellite, correction de propagation locale, etc.

La connaissance d'une pré-localisation, des éphémérides des satellites et d'une référence horaire approximative permet au récepteur de calculer le doppler des satellites en vue, diminuant grandement l'incertitude fréquentielle à balayer lors de la phase d'acquisition. De même, les éphémérides des satellites étant connues via la communication avec le serveur [8], il devient inutile pour le récepteur [11] de démoduler ces données sur le message de navigation [6b], ce qui élimine la contrainte de 30 secondes mise en évidence précédemment pour calculer la position. Il suffit alors au récepteur de déterminer un événement horaire sur le signal du satellite [6b], soit, en d'autres termes, de trouver la transition de code d'étalement puis l'heure transmise, le TOW sur le signal GPS qui passe toutes les 6 secondes. Il apparaît ainsi clairement un gain de performance notable tant au point de vue du temps nécessaire au calcul d'un point qu'au point de vue de la sensibilité. On entend par sensibilité la puissance minimum du signal reçu permettant au récepteur un traitement adéquat.

L'exemple d'assistance est donnée dans un réseau cellulaire de type GSM, il va de soi qu'il peut être étendu à d'autres systèmes tels que des systèmes de type WIFI, WIMAX.

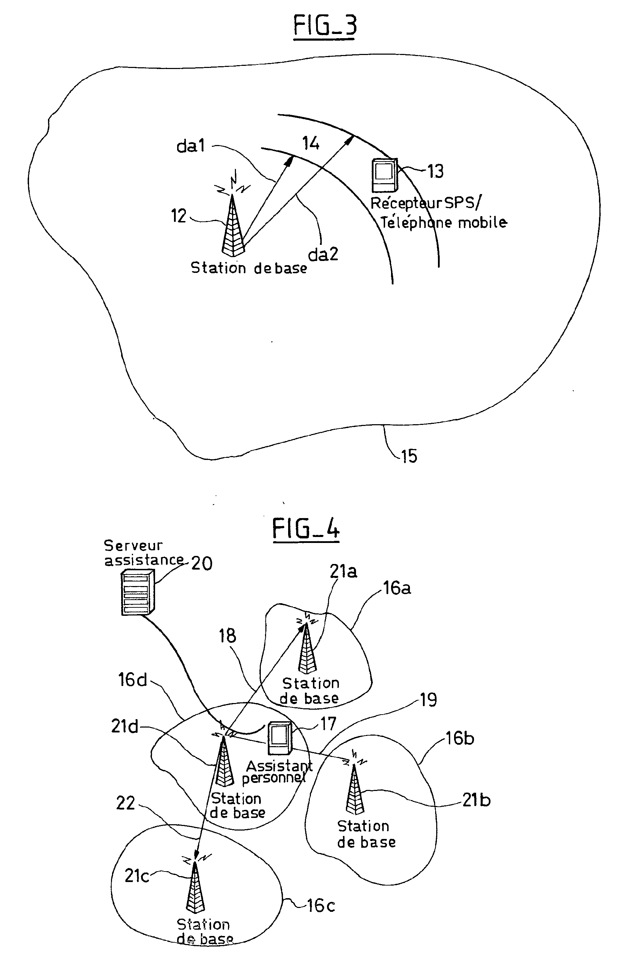

Par ailleurs, dans ce type de procédés reposant sur une technique d'assistance par un réseau de communication, la performance de la fonction de localisation repose en grande part sur la connaissance a priori de l'incertitude sur la précision de la pré-localisation fournie comme donnée d'assistance par le réseau de communication. Il est connu d'utiliser la cellule dans laquelle le dispositif de communication [11] se trouve. Néanmoins, dans la majorité des réseaux de communication cellulaire, la taille des cellules est variable entre 10m et 35km. Il est connu de l'homme de l'art qu'un procédé pour réduire l'incertitude consiste à utiliser une information de "Timing Advance" (avance temporelle) que le station de base [10] fournit au mobile [11]. Ce procédé est illustré figure 3. La station de base [12] servant la cellule dont la marque géométrique est représentée par la zone [15] requiert au mobile [13] de caler temporellement ses émissions radio fréquence dans un intervalle temporel correspondant aux distances [da1] et [da2]. Ces deux distances [da1] et [da2] sont mesurées par la station de base par un procédé bien connu de l'homme de métier qui porte le nom de mesure de temps d'aller-retour. L'information de calage temporel ainsi fournie par la station de base au mobile définit une zone géographique [14] dans laquelle se trouve le mobile [13]. Cette forme géographique est une couronne dont le centre est la station de base [12], dont le rayon intérieur est la distance [da1] et dont le rayon extérieur est la distance [da2]. Cette forme géométrique ainsi définie peut être utilisée pour déterminer l'incertitude de pré-localisation utilisée pour assister une localisation du mobile [13] via une méthode de GPS assisté ou plus généralement de GNSS assisté. La pré-localisation ainsi fournie au mobile [13] est plus précise que celle qui aurait pu être déduite de la seule connaissance de la cellule [15].

Cependant cette méthode, bien qu'efficace, présente une grande complexité. En effet, ce procédé implique la connaissance par le serveur de données d'assistance (figure 2, [8]) de l'information de "timing advance" et par conséquent d'informations de gestion de ressources radio uniquement connue par la station de base [13]. Or, dans de nombreuses applications telles que des applications IP, IMS (Integrated Multimédia Services), de telles informations ne sont pas directement accessibles.

La présente invention vise à fournir un système et un procédé plus simple et plus efficace permettant de fournir une pré-localisation des dispositifs mobiles dont l'incertitude est déterminée par la connaissance de la topologie du réseau.

A cet effet, l'invention a pour objet un procédé de détermination de l'incertitude liée à la localisation d'un dispositif mobile connecté à un système de communication cellulaire comprenant des stations de base servant des cellules associées, ledit procédé étant caractérisé par :
- une détermination de la position de la station de base à laquelle est connecté ledit dispositif mobile, cette station de base servant une cellule dite courante,
- une détermination de la position d'au moins une station de base servant une cellule voisine,
- une détermination de l'incertitude liée à la localisation du dispositif mobile déduite en fonction de la distance séparant la station de base à laquelle est connecté le dispositif mobile de la station de base servant la cellule voisine.

Selon un mode de réalisation, la cellule courante est entourée de n cellules voisines limitrophes et l'incertitude liée à la localisation du dispositif mobile est en fonction des distances séparant la station de base à laquelle est connecté le dispositif mobile des respectivement stations de base servant les cellules voisines limitrophes.

Selon un mode de réalisation, la détermination de l'incertitude liée à la localisation du dispositif mobile comprend une étape de détermination de la distance maximale parmi les distances séparant la station de base à laquelle est connecté le dispositif mobile des respectivement stations de base servant les cellules voisines limitrophes, puis une étape d'affectation de l'incertitude de localisation égale à ladite distance maximale.

Selon un mode de réalisation, la détermination de l'incertitude liée à la localisation du dispositif mobile comprend une étape de calcul de la moyenne des distances séparant la station de base à laquelle est connecté le dispositif mobile des respectivement stations de base servant les cellules voisines limitrophes, puis une étape d'affectation de l'incertitude de localisation égale à ladite moyenne.

Selon un mode de réalisation, la détermination de l'incertitude liée à la localisation du dispositif mobile comprend une étape de calcul d'un barycentre des positions de la station de base à laquelle est connecté le dispositif mobile et des positions des respectivement stations de base servant les cellules voisines limitrophes, puis une étape d'affectation de l'incertitude de localisation égale à ladite distance séparant la station de base à laquelle est connecté le dispositif mobile de ce barycentre.

Selon un mode de réalisation, l'incertitude ainsi déterminée est utilisée dans l'étape de pré-localisation du dispositif mobile fonctionnant en mode GNSS assisté.

L'invention a également pour objet un système de détermination de l'incertitude liée à la localisation d'un dispositif mobile, le système comprenant :
- un réseau de communication cellulaire comprenant des stations de base servant des cellules associées,
- au moins un serveur de localisation apte à déterminer la localisation du dispositif mobile et comprenant :
   des moyens de détermination de la position de la station de base à laquelle est connecté ledit dispositif mobile,
   des moyens de détermination de la position d'une station de base servant une cellule voisine limitrophe,
   des moyens de calcul de l'incertitude de la localisation du dispositif mobile en fonction de la distance séparant la station de base à laquelle est connecté le dispositif mobile de la station de base servant la cellule voisine limitrophe.

D'autres caractéristiques et avantages de l'invention apparaîtront à l'examen de la description détaillée ci-après, et des dessins annexés, sur lesquels
- la figure 1 illustre, de façon schématique, un système de navigation par satellites GPS,
- la figure 2 représente un système d'assistance à la navigation dit GPS assisté,
- la figure 3 illustre schématiquement un procédé de réduction de l'incertitude selon l'art antérieur,
- la figure 4 illustre schématiquement un système de détermination de l'incertitude de localisation selon un mode de réalisation de l'invention.

Selon un premier mode de réalisation, le système selon l'invention comporte :
- au moins un dispositif mobile incluant un récepteur de radionavigation satellitaire RNSS recevant des données satellitaires fournies par au moins trois satellites,
- au moins un serveur d'assistance,
le procédé comportant les étapes suivantes :
- réception par ledit dispositif mobile des signaux satellitaires,
- calcul par ledit dispositif mobile des distances entre ledit dispositif mobile et lesdits satellites,
- demande par ledit dispositif de données d'assistance audit serveur d'assistance, la dite demande comportant au moins une information de pré-localisation,
- transmission vers le dispositif mobile d'une information de pré-localisation, ladite information de pré-localisation étant établie suivant un procédé comportant les étapes suivantes :
   - Détermination par le serveur de localisation de la cellule dans laquelle se trouve ledit dispositif mobile,
   - Fourniture au dispositif mobile d'une information de pré-localisation caractérisée par une position égale à la position de ladite station de base servant ladite cellule dans laquelle se trouve ledit dispositif mobile et une incertitude déterminée en fonction des distances entre la station de base de la cellule courante et les stations de base des cellules voisines limitrophes.

Dans un premier exemple d'implémentation de l'invention, ladite fonction de calcul de l'incertitude se caractérise par les étapes suivantes :
- Détermination par ledit serveur d'assistance de la distance maximale parmi les distances séparant la station de base à laquelle est connecté le dispositif mobile des respectivement stations de base servant les cellules voisines limitrophes,
- Détermination de ladite incertitude égale à ladite distance maximale.

Ce premier exemple d'implémentation de l'invention est décrit figure 4. Le dispositif mobile couplé à un récepteur GNSS assisté [17], envoie une requête d'assistance vers le serveur de localisation [20], ladite requête incluant au moins une information de pré-localisation. Le dispositif mobile [17] est connecté à la station de base [21 d] servant la cellule [16d]. Le serveur d'assistance [20] détermine la pré-localisation du dispositif mobile par la connaissance de la position de ladite station de base [21d] servant la cellule [16d]. L'incertitude de pré-localisation est alors déterminée en suivant les étapes suivantes :
- Détermination de la distance [22] séparant la station de base [21d] de la station de base [21c] servant la cellule [16c]
- Détermination de la distance [19] séparant la station de base [21d] de la station de base [21 b] servant la cellule [16b]
- Détermination de la distance [18] séparant la station de base [21d] de la station de base [21 a] servant la cellule [16a]
- Détermination de la distance maximale parmi [18], [19], [22]
- Affectation de l'incertitude de pré-localisation égale à ladite distance maximale.

Dans un second exemple d'implémentation de l'invention, ladite fonction de calcul de l'incertitude se caractérise par le calcul de la moyenne des distances séparant la station de base à laquelle est connecté le dispositif mobile des respectivement stations de base servant les cellules voisines limitrophes.

Dans un troisième exemple d'implémentation de l'invention, ladite fonction de calcul de l'incertitude se caractérise par le calcul d'un barycentre des positions de la station de base à laquelle est connecté le dispositif mobile et des positions des respectivement stations de base servant les cellules voisines limitrophes, puis une étape d'affectation de l'incertitude de localisation égale à la distance séparant la station de base à laquelle est connecté le dispositif mobile à ce barycentre.

Selon une variante, le système selon l'invention comporte en outre :
- au moins un dispositif mobile incluant un récepteur de radionavigation satellitaire RNSS recevant des données satellitaires fournies par au moins trois satellites,
- au moins un serveur d'assistance,
le système suivant les étapes suivantes :
- réception par ledit dispositif mobile des signaux satellitaires,
- calcul par ledit dispositif mobile des distances entre ledit dispositif mobile et lesdits satellites
- Demande par ledit dispositif de données d'assistance audit serveur d'assistance, ladite demande comportant au moins une information de pré-localisation,
- Transmission vers le dispositif mobile d'une information de pré-localisation, ladite information de pré-localisation étant établie suivant un procédé comportant les étapes suivantes :
   1. Détermination par ledit serveur d'assistance de la cellule dans laquelle se trouve ledit dispositif mobile,
   2. Fourniture audit dispositif mobile d'une information de pré-localisation et d'incertitude de pré-localisation déterminées en fonction des distances séparant la station de base à laquelle est connecté le dispositif mobile des respectivement stations de base servant les cellules voisines limitrophes.

Il est entendu que l'information de pré-localisation ici décrite comme information d'assistance vers un dispositif mobile cherchant à se localiser par un système GNSS assisté peut être également utilisé pour déterminer la localisation d'un dispositif mobile possédant ou ne possédant pas la fonction de réception de signaux GNSS assisté.

## Revendications

1. Procédé de détermination de l'incertitude liée à la localisation d'un dispositif mobile connecté à un système de communication cellulaire comprenant des stations de base servant des cellules associées, ledit procédé étant **caractérisé par** :
i. une détermination de la position de la station de base à laquelle est connecté ledit dispositif mobile, cette station de base servant une cellule dite courante,
ii. une détermination de la position d'au moins une station de base servant une cellule voisine,
iii. une détermination de l'incertitude liée à la localisation du dispositif mobile déduite en fonction de la distance séparant la station de base à laquelle est connecté le dispositif mobile de la station de base servant la cellule voisine.

2. Procédé selon la revendication 1 **caractérisé en ce que** la cellule courante est entourée de n cellules voisines limitrophes et l'incertitude liée à la localisation du dispositif mobile est en fonction des distances séparant la station de base à laquelle est connecté le dispositif mobile des respectivement stations de base servant les cellules voisines limitrophes.

3. Procédé selon la revendication 2, **caractérisé en ce que** la détermination de l'incertitude liée à la localisation du dispositif mobile comprend une étape de détermination de la distance maximale parmi les distances séparant la station de base à laquelle est connecté le dispositif mobile des respectivement stations de base servant les cellules voisines limitrophes, puis une étape d'affectation de l'incertitude de localisation égale à ladite distance maximale.

4. Procédé selon la revendication 2, **caractérisé en ce que** la détermination de l'incertitude liée à la localisation du dispositif mobile comprend une étape de calcul de la moyenne des distances séparant la station de base à laquelle est connecté le dispositif mobile des respectivement stations de base servant les cellules voisines limitrophes, puis une étape d'affectation de l'incertitude de localisation égale à ladite moyenne.

5. Procédé selon la revendication 2, **caractérisé en ce que** la détermination de l'incertitude liée à la localisation du dispositif mobile comprend une étape de calcul d'un barycentre des positions de la station de base à laquelle est connecté le dispositif mobile et des positions des respectivement stations de base servant les cellules voisines limitrophes, puis une étape d'affectation de l'incertitude de localisation égale à la distance séparant la station de base à laquelle est connecté le dispositif mobile à ce barycentre.

6. Procédé selon l'une des revendications précédentes, **caractérisé en ce que** l'incertitude ainsi déterminée est utilisée dans l'étape de pré-localisation du dispositif mobile fonctionnant en mode GNSS assisté.

7. Système de détermination de l'incertitude liée à la localisation d'un dispositif mobile, le système comprenant :
i. un réseau de communication cellulaire comprenant des stations de base servant des cellules associées,
ii. au moins un serveur de localisation apte à déterminer la localisation du dispositif mobile et comprenant :
1. des moyens de détermination de la position de la station de base à laquelle est connecté ledit dispositif mobile,
2. des moyens de détermination de la position d'une station de base servant une cellule voisine limitrophe,
3. des moyens de calcul de l'incertitude de la localisation du dispositif mobile en fonction de la distance séparant la station de base à laquelle est connecté le dispositif mobile de la station de base servant la cellule voisine limitrophe.
